Europäisches Patentamt

European Patent Office

Office européen des brevets

(11) Publication number: **0 193 623**
**A1**

# EUROPEAN PATENT APPLICATION

(21) Application number: **85102365.5**

(22) Date of filing: **02.03.85**

(51) Int. Cl.⁴: **G 01 F 11/24**

(43) Date of publication of application: **10.09.86**
Bulletin 86/37

(84) Designated Contracting States: **AT BE CH DE FR GB LI LU NL SE**

(71) Applicant: **PERIMECCANICA SRL, via Caduti di Amola 20, Bologna (IT)**

(72) Inventor: **Peri, Angelo, via San Rocco 5, Bologna (IT)**

(74) Representative: **Sassatelli, Franco, INIP via Ruggi 5, I-40137 Bologna (IT)**

(54) **Bench sugar dosimeter.**

(57) It foresses a dosimeter-conveyer (10) which is fitted with four orthogonal seat (11), is integral with its shaft (12) and a spring device which allows its stop in station with an automatic release.

For levelling on the border of the turning chamber, the dose is separated in the seat coming from the upper loading position from the remaining product gravitationally insisting in the container hopper. While the above dose reaches the intermediate station, the subsequent seat is charged. From this condition, the erogations will occur by means of each displacement of the handwheel by 90° required for bringing the doses from the intercluded intermediate position into the lower delivery one where it is discharged through a small beak (21).

0193623

- 1 -

"Bench sugar dosimeter".

The invention refers to a delivering device of sugar doses to be employed on bar benches to enable the customers to sweaten the drinks. The device is fitt ed either on a fixed support or on a sliding line which thus enables to suit the position.

Some types of sugar deliverers are already known; one of them foresees a dos ing device to be acted by means of cams and with lever control. The device turns out to be easily deranged and is liable to being blocked owing to in- crustations. In addition, the lever action which is liable to an initial catch ing condition by pressure is scarcely compatible with the natural requirements of such a device and, through the beating actions differently impressed by the clients, may lead to unhinging of the device. Another type can be controlled by means of a crank gear of the throttle type for cocks. This system does not show the difficulties and defects of the lever devices, but it presupposes a condition of manual catch by pressure that requires a certain concentration and effort.

The invention device foresees a control by means of only the fingers casually introduced and, therefore, with mnemonic checking between the pins fitted radially on a control wheel. This allows a ready employ with an utmost low ef-

- 2 -                    0193623

fort and without the necessity of concentration on the device. The system essentially employs as kinematic motion an inner rotating part which carries out loading and delivery in a gravitational way through correspondence of positions. This allows a compactedness of the whole which excludes fragile components or differently strained ones. The device according to the invention is controlled by means of a wheel cosisting of a discoidal body fitted with a system of radially fitted pivots. The fingers casually introduced in the above pivots can control the delivery of one or more doses by turning the wheel with hand traction according to one or more 90° excursions. The excursions are regulated in automatic release by a spring mechanism acting by means of position retaining. The device employs an upper container with a hopper which gravitationally ensures the product presence until it is exhausted in the loading station, where four dosing seats successively arrive that are fitted on orthogonal axles on the cylindrical wall of a dosing conveyor consisting of only one part and fitted according to a shape in the rotation chamber and supported centrally integral with the control wheel shaft. For levelling on the border of the rotation chamber, the dosing allowed quantity is separated from the remaining product in the loading station; while this one reaches the intermediate station when the 90° excursion has been completed, where the space is intercepted by the chamber wall, the preceding seat is supplied with product in loading station. From this position, the deliveries will be allowed until the product is exhausted by means of single 90° displacements of the wheel to bring the doses in succession from the intermediate intercepted station to the delivery one. In the delivey station fitted below in counterposition to the loading one, the discarge takes place with opening correspondence through a delivery small beak.

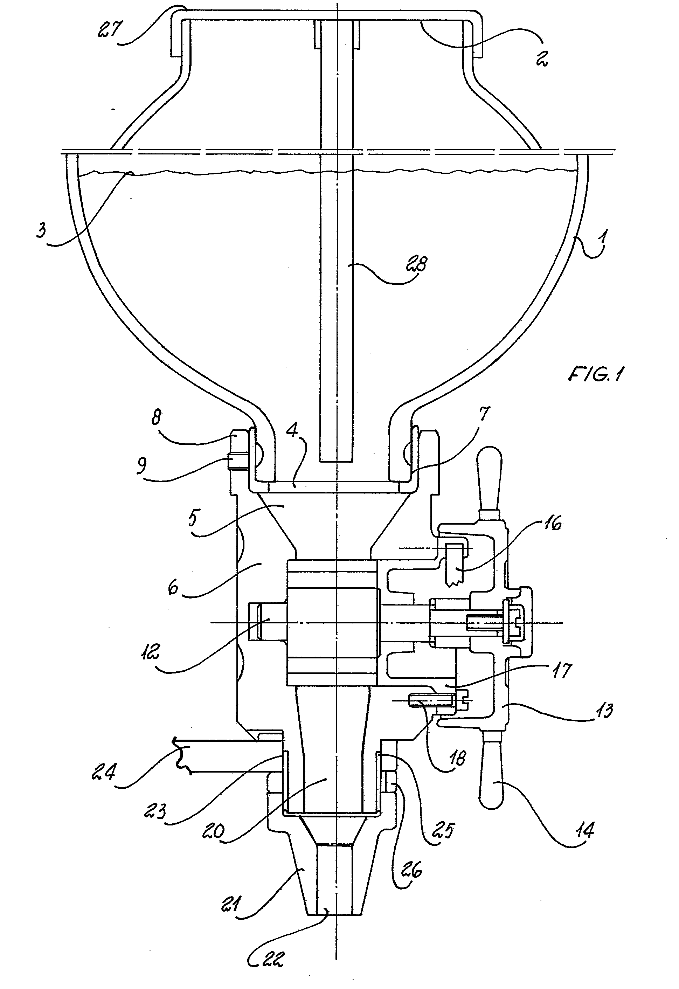

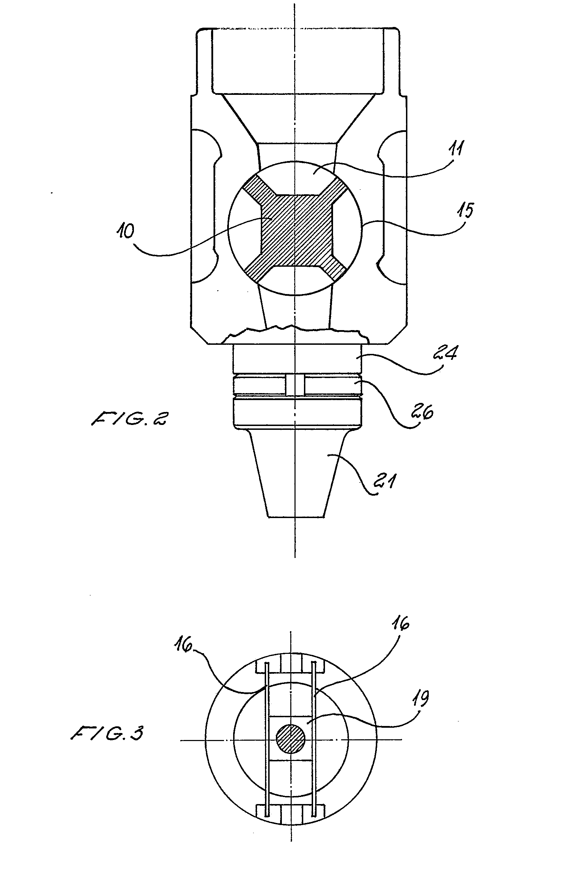

A form of execution is illustrated in a merely indicative way and, as such, without limitation of the proceeding, on the drawings of Tables 1 and 2, where Fig. 1 is the longitudinal section of the device. Fig. 2 is the longitudinal section of the same device displaced by 90° in the respect to it and without the container. Fig. 3 is the view of the

0193623

device regulating the automatic release for maintaining the position of the dosing and conveying device.

The version employs the glass container 1 with above circular opening 2 for the product input 3 which, on the bottom is laid on the dosing conveyer passing through mouth 4 and hopper 5, above groove of metal piece 6 of the device. The steady support of the container is allowed on the circular crown 7 of cylindrical layer 8 and by screw 9 fixing. For actioning, the dosing conveyor 10 with four seats 11 in the chamber of body 6 is moved on shaft 12 by means of wheel 13 to be shifted by traction of the fingers introduced into its pivots 14 in radial arrangement, by performing two 90° shittings successively: these ones allows the first dose to pass from the loading station to the precluded one and then to the delivery one, while the preceding seat is already supplied again with product and in the intermediate station, whereas the one which in its turn preceds it is in loading station.

The dosing and carrying device turns in cavity 15 in counter shape and is kept in position corresponding to the four stations with hortogonal scheme by a pair of flat springs 16 fitted in part 17 of fixed support on body 6 by means of two screws 18 and acts on small block 19 integral with the dosing carrier 10 and wheel 13. For delivering the product, the wheel is rotated by 90° bringing the seat containing the product from the intermediate position on the delivery duct 20 fitted with small beak 21 below it and delivery mouth 22.

For mounting the device, collar 25 of part 6 is inserted into hole 23 of the supporting bracket 24 which can be fitted on the bench in different way, and the whole is blocked by means of ring 26. The small beak 21 is then screwed on. Tank can be precluded by means of cover 27 which inside holds integral rod 28. The last one can be used to stir the product in the case it tends to heap in the loading duct.

Claims.

1) Bench sugar dosimeter, characterized by the fact that employs as kinematic motion an inner rotating part which carries out loading and delivery in a gravitational way through correspondence of positions. This allows a compactedness of the whole which excludes fragile components of differently strained ones. The device according to the invention is controlled by means of a wheel consisting of a discoidal body fitted with a system of radially fitted pivots. The fingers casually introduced in the above pivots can control the delivery of one or more doses by turning the wheel with hand traction according to one or more 90° excursions. The excursions are regulated in automatic release by a spring mechanism acting by means of position retaining. The device employs an upper container with a hopper which gravitationally ensures the product presence until it is exhausted in the loading station, where four dosing seats successively arrive that are fitted on orthogonal axles on the cylindrical wall of a dosing conveyor consisting of only one part and fitted according to a shape in the rotation chamber and supported centrally integral with the control wheel shaft. For levelling on the border of the rotation chamber, the dosing allowed quantity is separated from the remaining product in the loading station; while this one reaches the intermediate station when the 90° excursion has been completed, where the space is intercepted by the chamber wall, the preceding seat is supplied with product in loading station. From this position, the deliveries will be allowed until the product is exhausted by means of single 90° displacements of the wheel to bring the doses in succession from the intermediate intercepted station to the delivery one. In the delivery station fitted below in counterposition to the loading one, the discarge takes place.

2) Bench sugar dosimeter, as described in claim 1, characterized by the fact that it employs a glass container (1) with an above circular opening (2) for the product input which, on the bottom is laid on the dosing conveyer passing through a mouth (4) and a hopper (5), above groove of metal piece (6) of the device. The steady support of the container is allowed on a circular crown (7) of a cylindrical layer (8) and by a screw (9) fixing.

3) Bench sugar dosimeter, as described in claim 1, characterized by the fact that for actioning, the dosing conveyer (10) with its four seats (11) in the chamber of body (6) is moved on shaft (12) by means of a wheel (13) to bo shifted by traction of the fingers introduced into its pivots (14) in radial arrangement, by performing two 90° shiftings successively: these ones allow the first dose to pass from the loading station to the precluded one and then to the delivery one, while the preceding seat is already supplied again with product and in the intermediate station, whereas the one which in its turn precedes it is in loading station.

4) Bench sugar dosimeter, as described in claim 1, characterized by the fact that the dosing and carrying device turns in a cavity (15) in counter shape and is kept in position corresponding to the four stations with hortogonal scheme by a pair of flat springs (16) fitted in a part (17) of fixed support on body (6) by means of two screws (18) and acts on a small block (19) integral with the dosing carrier (10) and wheel (13).

5) Bench sugar dosimeter, as described in claim 1, characterized by the fact that for delivering the product, the wheel is rotated by 90° bringing the seat containing the product from the intermediate position on a delivery duct (20) fitted with a small beak (21) below it and a delivery mouth (22).

6) Bench sugar dosimeter, as described in claim 1, characterized by the fact that for mounting it a collar (25) of part (6) is inserted into a hole (23) of the supporting bracket (24) which can be fitted on the bench in different ways, and the whole is blocked by means of a ring (26). The small beak (21) is then screwed on.

0193623

7) Bench sugar dosimeter, as described in claim 1, characterized by the fact that the tank (1) can be precluded by means of a cover (27) which inside holds integral a rod (28).

0193623

FIG.1

0193623

FIG.2

FIG.3

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| X | US-A-1 497 772 (CONKLIN)<br><br>* Figures; page 1, line 100 - page 2, line 101 * | 1,2,4-6 | G 01 F 11/24 |
| X | GB-A- 104 243 (REPETTO)<br>* Figures; page 1, lines 23-32 * | 1 | |
| X | GB-A- 122 889 (CORNER LTD.)<br>* Figures * | 1,3-5 | |
| | | | **TECHNICAL FIELDS SEARCHED (Int. Cl.4)**<br><br>G 01 F |

The present search report has been drawn up for all claims

| Place of search | Date of completion of the search | Examiner |
|---|---|---|
| THE HAGUE | 29-10-1985 | NUIJTEN E.M. |